# EUROPÄISCHE PATENTANMELDUNG

(11) **EP 0 924 920 A1**
(43) Veröffentlichungstag der Anmeldung: **23.06.1999**
(21) Anmeldenummer: 97250376.7
(22) Anmeldetag: 19.12.1997
(51) Int. Cl.: H04M 11/06, H04N 1/32, H04N 7/14, H04M 1/65, H04L 29/00

(54) **Multimedialer Kommunikationsterminal**

(71) Anmelder: arTec Gesellschaft für computerunterstützende Darstellungstechnik m.b.H., 10707 Berlin (DE)
(72) Erfinder: Baslik, Ali Riza, 10707 Berlin (DE)

(57) **Zusammenfassung**

Dieser Terminal ermöglicht durch den Einsatz entsprechender Hardware-Komponenten sowohl die digitale als auch analoge Eingabe und Ausgabe von Informationen über Kommunikationsnetzwerke und elektronische Postsysteme.
Diese Informationen beziehen sich auf das Schreiben und Lesen bzw. Drucken von Texten, auf das Scannen und Drucken von Zeichnungen, auf das Einspielen und Abrufen von Daten und Dateien und auf das Sprechen und Abhören von Sprach-Nachrichten.
Die öffentliche Zugänglichkeit des multimedialen Kommunikationsterminals erschließt einem breiten Anwenderkreis die Nutzung elektronischer Postsysteme und Kommunikationsnetzwerke.

## Beschreibung

Die Erfindung bezieht sich auf einen multimedialen Kommunikationsterminal, der als Endgerät einem erweiterten Anwenderkreis die Nutzung elektronischer Postsysteme und Kommunikationsnetzwerke ermöglicht. Der multimediale Kommunikationsterminal fungiert als einheitliche und universelle Schnittstelle, um Nachrichten und Daten sowohl in digitaler als auch in analoger Form senden und empfangen zu können. Die technische Funktionalität konstituiert sich aus Input- und Output-Services, die diese analoge und digitale Multimedia-Kommunikation ermöglichen.
Als universal und öffentlich einsetzbares Endnutzer-Gerät erschließt es einer breiten Anwenderschicht den Nutzen von Kommunikationsnetzwerken und elektronischen Postsystemen.

Das Internet als weltweites Informations- und Kommunikationsnetzwerk spielt in Bereichen der Wirtschaft, Bildung und im privaten Umfeld zunehmend eine wesentliche Rolle.
Die Infrastruktur des Internets ist enorm gewachsen und viele Entwicklungen für relevante Funktionen (elektronische Nachrichten, Datenübertragungen und Kommunikation durch den Einsatz von entsprechenden Netzwerkprotokollen, Browsern, Programmiersprachen, Standard-Datenformate) sind vollzogen worden.
Auch elektronische Postsysteme, die Briefe und Sendungen weitgehend auf elektronischem Weg transportieren, werden zunehmend eingesetzt.
Insbesondere Unternehmen, die von einem vorhandenen EDV- und Hardwarebestand ausgehen, versenden über elektronische Postsysteme ihre Regelkommunikation (Briefe, Rechnungen, Mahnungen, Kontoauszüge und Infos). Aus der EDV heraus wird der Schriftverkehr elektronisch (und auch über offline-Datenträger) an das elektronische Postsystem übergeben und in einer Servicestation, die nahe am Bestimmungsort liegt, gedruckt, kuvertiert und in Papierform zugestellt.

Sowohl die Nutzung des Internets als Kommunikationsnetzwerk als auch der elektronischen Postsysteme ist gebunden an technische und organisatorische Bedingungen. Der Teilnehmer benötigt einen Computer mit intenetfähigen Komponenten (Software, Hardware), ISDN- oder Modemanschluß und einen Provider (Service-Anbieter) für den Internetzugang bzw. elektronischen Briefverkehr. Außerdem sind Grundkenntnisse im Umgang mit Computern erforderlich.
Die Erfindung des multimedialen Kommunikationsterminals bezweckt eine breitere Nutzung des elektronischen Postsystems und von Kommunikationsnetzwerken durch seine öffentliche Zugänglichkeit.

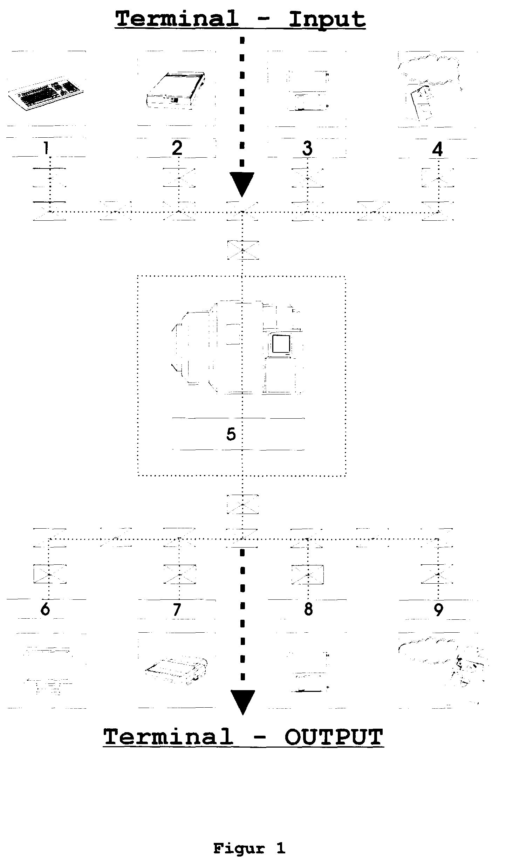

Der multimediale Kommunikationsterminal integriert verschiedene vorhandene Endgeräte von elektronischen Kommunikationsnetzwerken (5) und elektronischen Postsystemen (5) in ein einziges Endgerät. Figur 1 zeigt die Anwendungen des multimedialen Kommunikationsterminals.

| Input-Services sind: | |
|---|---|
| 1. Erstellung elektronischer Korrespondenz und Versenden | (1) |
| 2. Scannen von Vorlagen und Versenden | (2) |
| 3. Einspielen von Dateien über Laufwerk und Versenden | (3) |
| 4. Digitale Sprachaufnahme und Versenden | (4) |

| Output-Services sind: | |
|---|---|
| 1. Lesen von Sendungen am Bildschirm | (6) |
| 2. Ausdruck von Sendungen | (7) |
| 3. Übertragung von Sendungen auf mobile Datenträger | (8) |
| 4. Abhören von Sprachaufnahmen. | (9) |

Durch die universelle und öffentliche Einsatzmöglichkeit des Terminals werden verschiedene Bevölkerungsschichten in die sich entwickelnde Informationsgesellschaft einbezogen und die Möglichkeiten elektronischer Kommunikation einer breiten Anwenderschicht zugeführt. Der multimediale Kommunikationsterminal integriert herkömmliche und elektronische Kommunikationsmedien. Dazu kommen die Substitution von Transportverkehr durch elektronischen Verkehr (Umweltentlastung) und die Kostenreduktion bei Post- und Informationsdienstleistungen.

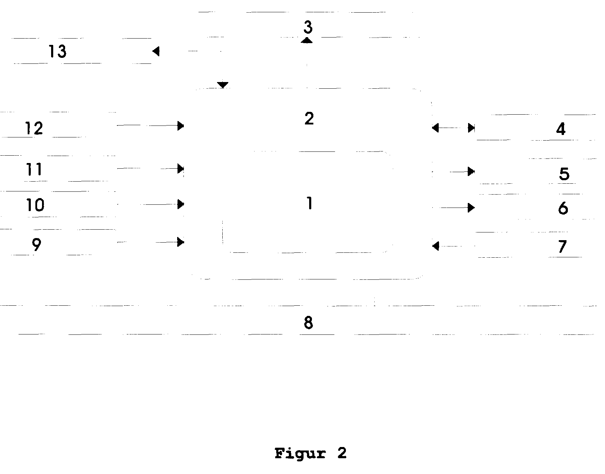

In Figur 2 wird der prinzipielle Aufbau und die Funktionsweise der Hardware- und Betriebssystem-Komponenten in einer Zeichnung dargestellt. Die Richtungen der Pfeile geben dabei den Fluß der Informationen an.
Dieser Terminal wird ausgestattet mit folgenden Hardware-Eingabe- und Ausgabeeinheiten (2): mit einem Scann- (7) und Druckmodul (5), mit einem Laufwerk (4), einem Mikrophon (10) und einer Voicebox (6), mit einer Digitalkamera (9) und einem Monitor oder Touchscreen (3), mit einer Tastatur (12) und einem Trackball (11) sowie mit Internetkomponenten (ISDN, ATM) zum Anschluß an Kommunikationsnetzwerke und elektronische Postsysteme (8). Dazu wird eine Magnetkarteneinheit (13) installiert, über die die Identifikation und Kostenabrechnung realisiert wird.

Das technisch-operative Betriebssystem stellt die elektronischen Verbindungen her und regelt den Postdatenstrom. Zudem stellt dieses Betriebssystem ein netzwerkfähiges Protokoll bereit und integriert technisch die verschiedenen Hardwarekomponenten. Ebenso wird durch dieses Betriebssystem eine OCR-Fähigkeit zur Minderung des Datenaufkommens bei gescannten Vorlagen, internetfähiges E-Mailing, die Druck- und Diskettenausgabe, Datenkompression, die Datenverschlüsselung und Datensicherheit realisiert.

Den Nutzern steht eine Navigationsoberläche für die Bedienung von Anwendungen des multimedialen Kommunikationsterminals zur Verfügung.
Diese Navigationsoberfläche schließt die Bedienung der angebotenen Dienste, eine Formularbearbeitung über standardisierte Eingabemasken, eine Textverarbeitung für Briefe und Postkarten, die Sprach- und Bildverarbeitung und Kombination mit der Textverarbeitung ein.

## Patentansprüche

1. Multimedialer Kommunikationsterminal zur Nutzung von Kommunikationsnetzwerken und elektronischen Postsystemen, der folgende Anwendungen in einem Endnutzer-Gerät integriert: Erstellung elektronischer Korrespondenz, Scannen von Vorlagen, Einspielen von Dateien und digitale Sprachaufnahme sowie das Lesen von Sendungen, Ausdrucken von Sendungen, Übertragung von Sendungen auf Datenträger und das Abhören von Sprachaufnahmen.
Hardware-Komponenten als technische Grundlage dieser Input- und Output-Funktionen sind:
Scannmodul, Druckmodul, Disketten-Laufwerk, Mikrophon, Voicebox, Digitalkamera, Monitor, Touchscreen, Tastatur, Trackball, ISDN-Anschluss, Magnetkarteneinheit mit PIN-Code.
Das technisch-operative Betriebssystem des multimedialen Kommunikationsterminals realisiert die elektronischen Verbindungen, die Netzwerk-Protokolle, die Integration der Hardware und der Navigationsoberfläche.
